# EUROPEAN PATENT APPLICATION

(11) **EP 1 880 947 A2**
(43) Date of publication of application: **23.01.2008**
(21) Application number: 07252679.1
(22) Date of filing: 03.07.2007
(51) Int. Cl.: B65B 69/00, B65D 77/06, B65D 88/16, B65D 90/04, B65G 65/23

(54) **A container, dispensing device, and method of dispensing goods**

(30) Priority: 13.07.2006 GB 0613896
(71) Applicant: Tripack Engineering Ltd., Rotherham South Yorkshire S65 3QJ (GB)
(72) Inventor: Higgins, Adrian, Pontefract WF8 4NQ (GB); Bagley, Philip, Rotherham S65 3QJ (GB)

(57) **Abstract**

A container is described having openings on an inside surface, wherein the openings are for use with a vacuum pump for retaining a liner within the container whilst contents of the liner are being dispensed.

## Description

### Field of the invention

Embodiments of the present invention relate to a container, dispensing device, and method of dispensing goods.

### Background to the Invention

Containers are often used to deliver goods to a destination. For example, in the soft drinks industry, a reusable container containing plastic preforms is used to deliver the preforms to a soft drinks manufacturer. The preforms are blown out to form bottles, washed and filled with a soft drink. A cap is screwed onto the bottle to seal the bottle.

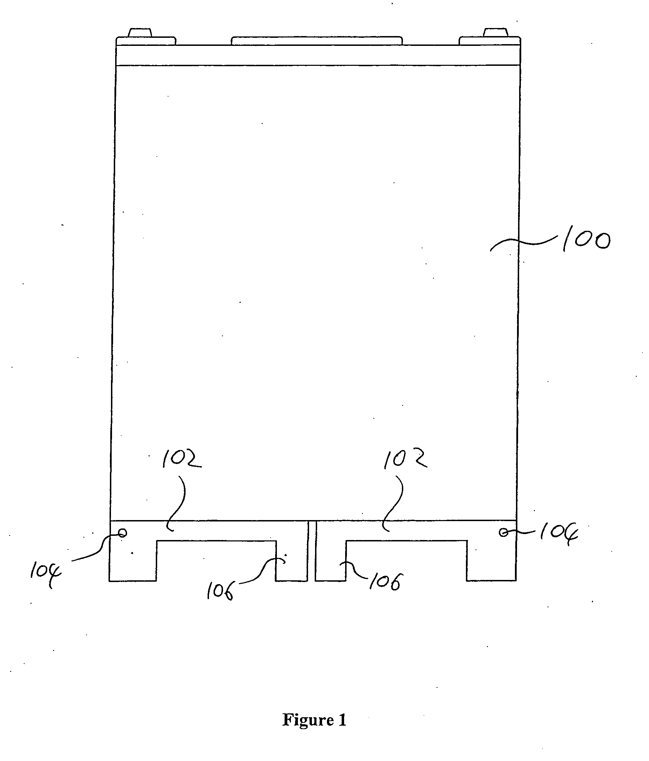

Figure 1 shows a side view of the reusable container 100 for the preforms. The container 100 includes two rectangular trapdoors 102 that are attached to the container 100 using respective hinges 104 along the bottom of respective sides of the container. Support feet 106 are provided on the trapdoors 102 to ensure that the container 100 remains closed during transportation storage, when resting on, for example, the ground or another container. When the container is moved around using a forklift truck, the forks of the forklift truck hold the trapdoors 102 closed.

To dispense the preforms, the container is loaded onto a dispensing device by a forklift truck. The forks of the forklift truck may strike the support feet 106 and cause them to be damaged. This then requires replacement of the trapdoors 102 or the whole container 100.

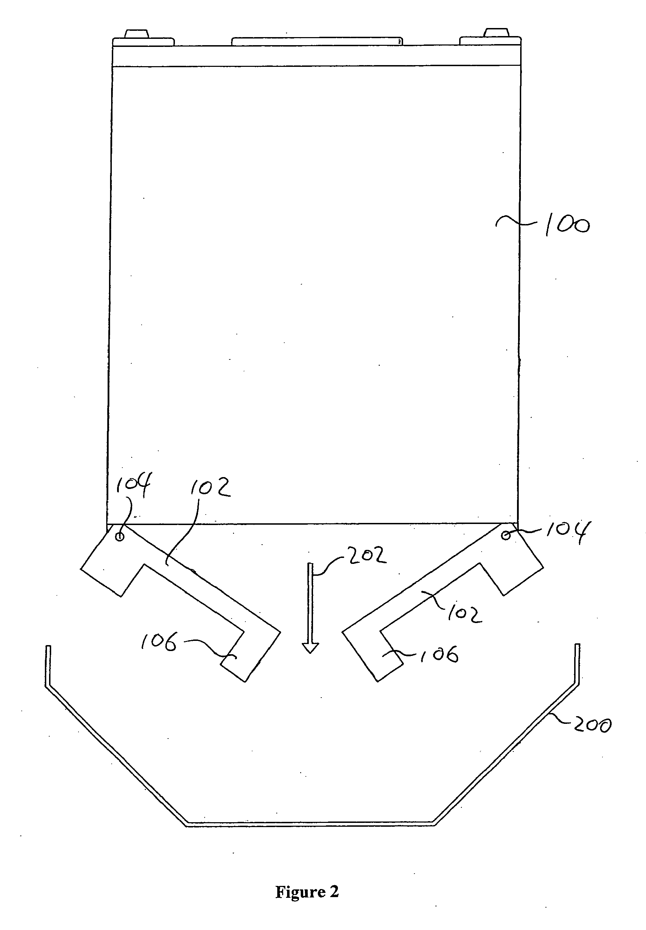

Once the container 100 has been loaded onto the dispensing device, the two trapdoors 102 in the base of the container are opened, and the preforms fall out of the container into a hopper underneath the container. An uncontrolled quantity of the preforms falls into the hopper, as all of the preforms in the container fall into the hopper. Figure 2 shows a side view of the container 100 when the trapdoors 102 have been opened, and also shows the hopper 200 located underneath the container 100. The dispensing device is not shown. When the trapdoors 102 are opened, the contents fall into the hopper 200 in the direction of the arrow 202.

During transportation and storage, the base of the container 100, including the support feet 106, may collect debris. This debris may fall into the hopper 200 along with the contents of the container, which causes hygiene problems. Also, the reusable container 100 must be returned for refilling. The containers must, therefore, be stored and transported, which has associated costs.

The container 100 typically holds up to around 7000 preforms. The bottles formed from the preforms can hold various products. Different products are typically associated with different caps. Caps are not washed by the manufacturer, for example the soft drinks manufacturer, and are therefore sealed in plastic bags and transported in cardboard boxes before being transported to the manufacturer. The boxes and bags are manually opened by the manufacturer using knives, and the caps are manually poured into a hopper. As the caps are only for a single product, only a certain number of caps may be required. Therefore, to avoid handling or waste of caps at the end of a manufacturing run for a product, only a certain number of caps is poured into the hopper. The approximate number of caps poured into the hopper is judged visually by the person handling the caps. Once the approximate required amount has been poured into the hopper, the bag inside the box must be resealed. This is typically done using sticky tape, which can be messy, and may require cutting with a knife when more of the caps are required.

The use of knives has associated health and safety concerns. Also, when a box is empty, the box and the bag contained inside the box must be discarded, which has associated costs and environmental impact. Each box contains around 15,000 caps, which equates to around 20 minutes of product manufacturing time. Therefore, a large number of empty boxes and bags must be discarded. The caps are not transported in the containers 100, as when the trapdoors 102 are opened, the bag itself may fall into the hopper, and if the bag was secured inside the container 100, a person would have to cut the bag using a knife when positioned underneath the container 100, which has unacceptable health and safety concerns.

It is an object of embodiments of the invention to at least mitigate one or more of the problems of the prior art.

### Summary of the Invention

According to a first aspect of embodiments of the invention, there is provided a container having openings on an inside surface, wherein the openings are for use with vacuum means for retaining a liner within the container whilst contents of the liner are being dispensed.

Thus, a container can be used to store, for example, caps which are stored within a liner, for example a plastic bag. The liner is retained within the container by using vacuum means such as, for example, a vacuum pump, and the liner can be easily removed when required, for example by disconnecting the vacuum pump.

In certain embodiments, the container comprises a base, wherein the base includes a first openable closure, and wherein the first closure is arranged when opened to direct contents being dispensed from the container. Therefore, the contents can be directed, for example, away from the underneath of the container, and debris on the underside of the container (for example, on the base or on the first closure) does not become mixed with the dispensed contents of the container. For example, the container may have a footprint whilst resting on the ground, where the footprint comprises the parts that touch the ground and the area between those parts.

According to a second aspect of embodiments of the invention, there is provided a container including a base, wherein the base includes a first openable closure, and wherein the first closure is arranged when opened to direct contents to be dispensed from the container. Therefore, the contents can be directed, for example, away from underneath the container, and debris on the underside of the container (for example, on the base or on the first closure) does not become mixed with the dispensed contents of the container.

In certain embodiment, the container comprises openings on an inside surface of the container, wherein the openings are for use with a vacuum pump for retaining a liner within the container whilst contents of the liner are being dispensed. Therefore, the liner is not dispensed along with the contents.

In certain embodiments, the first closure comprises a trapdoor. A trapdoor is of simple construction. As the first closure comprises only one trapdoor, support feet are not required in a position where they may be struck, for example, by the forks of a forklift truck. Preferably, the first closure includes flaps, and the first closure and the flaps form a spout for directing the contents when the first closure is opened. The direction in which the contents are directed can, therefore, be well defined.

Preferably, the trapdoor is openable such that an edge of the trapdoor is positioned close enough to or beyond an edge of a footprint of the container so as to direct contents outside the footprint. The contents are therefore not mixed with any debris on the underside of the container that falls into the area of the footprint.

In certain embodiments, the container comprises a lid having a second openable closure. The container can therefore be used for fast, easy dispensing of an uncontrolled quantity of the contents, and also for dispensing of a controlled quantity.

In certain embodiments, the container includes a liner, and the lid includes means for sealing the liner. This avoids the need to use sticky tape to seal the liner.

Preferably, the means for sealing the liner comprises a cylinder having a groove or through hole for receiving open ends of the liner. The means for sealing the liner is, therefore, of cheap and/or simple construction. Preferably, the cylinder is rotatable, so that the liner can be wrapped around the cylinder to seal the liner. Preferably, the means for sealing the liner comprises locking means for locking rotation of the cylinder. Therefore, unwanted rotation of the cylinder to unseal the liner can be avoided.

In certain embodiments, the container comprises first and second pivotable walls which may be pivoted so as to lie flat against the base, and third and fourth foldable walls which may be folded so as to lie flat against the base, such that the container may be reduced to a reduced size, collapsed state and returned to an upright state.

The container, when empty, can therefore be stored and/or transported more efficiently when in the collapsed state.

According to a third aspect of embodiments of the invention, there is provided a container having a first openable closure for dispensing of an uncontrolled quantity of contents, and a second openable closure for dispensing of a controlled quantity of the contents.

According to a fourth aspect of embodiments of the invention, there is provided a method of dispensing goods from a container, comprising opening a closure in a base of the container to dispense an uncontrolled amount of contents and to direct the dispensed contents.

According to a fifth aspect of embodiments of the invention, there is provided a method of dispensing goods, comprising: applying a vacuum pump to a container to retain a liner inside the container; and dispensing contents from the liner.

According to a sixth aspect of embodiments of the invention, there is provided a dispensing device for dispensing goods from a container, the dispensing device comprising means for rotating the container to dispense the goods from an opening in a lid of the container. The dispensing device can, therefore, dispense a controlled amount of the goods, without the need for a person to manipulate the container to dispense the goods.

In certain embodiments, the dispensing device comprises a vacuum pump for retaining a liner within the container via openings in an inner surface of the container. The container may therefore contain a liner such as a bag, and the bag can be prevented from being dispensed with the goods.

In certain embodiments, the dispensing device comprises a dispensing chute for directing goods being dispensed from the container. The goods being dispensed can therefore be directed as they are being dispensed.

In certain embodiments, the goods are dispensed into a hopper, and the dispensing device comprises a level detector for detecting whether the goods being dispensed have reached a level in the hopper, and also comprises means for stopping or reversing rotation of the container when the goods have reached the level in the hopper. The amount of goods therefore does not have to be visually inspected to determine whether or not the goods have reached the desired level. The level may be more accurately determined by the dispensing device.

### Brief Description of the Drawings

Embodiments of the invention will now be described, by way of example only, with reference to the accompanying drawings, in which:
Figure 1 shows a side view of a known container;
Figure 2 shows a side view of a known container and hopper, with trapdoors of the container open;
Figure 3 shows a perspective view of a container according to an embodiment of the invention;
Figure 4 shows the container when in a collapsed state;
Figures 5 to 10 show the container in various stages of reassembly into an upright state;
Figure 11 shows the assembled container in an assembled, or upright state;
Figure 12 shows a cross section of the base of the container;
Figure 13 shows a cross section of the base of the container;
Figure 14 shows a cross section of the base of the container with the trapdoor open;
Figure 15 shows a cross section of the base of the container with the trapdoor open;
Figure 16 shows a view from underneath the container and forklift truck forks;
Figure 17 shows a perspective view of the base of the container;
Figure 18 shows a partial cross-section of the container;
Figure 19 shows a perspective view of the lid of the container;
Figure 20 shows a sealing and locking mechanism in the lid;
Figure 21 shows a cross-section of the sealing and locking mechanism and a liner before the liner is sealed;
Figure 22 shows a cross-section of the sealing and locking mechanism during sealing of the liner;
Figure 23 shows a cross-section of the sealing and locking mechanism after the liner has been sealed;
Figure 24 shows a perspective view of an embodiment of a dispensing device for dispensing goods from the trapdoor in the base of the container;
Figure 25 shows the dispensing device with the container mounted thereon;
Figure 26 shows the dispensing device and container with the trapdoor of the container open;
Figure 27 shows a perspective view of an embodiment of a dispensing device for dispensing goods through the lid of the container;
Figure 28 shows a side view of the dispensing device;
Figure 29 shows a side view of the dispensing device, ready to receive a container;
Figure 30 shows a side view of the dispensing device, when the dispensing device is in a position and/or configuration for dispensing goods through the lid of the container;
Figure 31 shows the dispensing device, the container and a hopper; and
Figure 32 shows a part of the container and dispensing device in cross-section.

### Detailed Description of Embodiments of the Invention

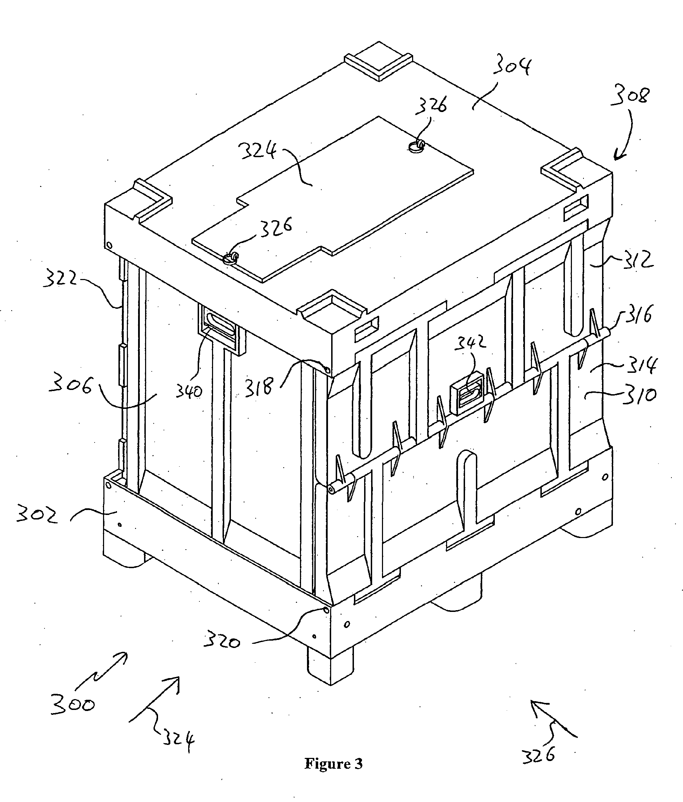

The container 300 shown in figure 3 comprises a lower portion, or base, 302 and an upper portion or lid, 304. The container 300 also comprises four side walls. A first side wall 306 is of unitary construction. A second side wall 308, opposite the first wall 306, is generally identical to the first wall 306. The first 306 and second 308 side walls are attached to the base 300 by a respective hinge, not shown in figure 3.

A third side wall 310 comprises two panels 312 and 314, joined together by a hinge 316. The upper panel 312 is attached to the lid 304 by a hinge 318, and the lower panel 314 is attached to the base 300 by a hinge 320. A fourth side wall 322, opposite the third side wall 310, is generally identical to the third side wall 310.

The lid 304 includes an openable closure 324 which covers an opening (not shown) in the lid 304. The closure 324 is attached to the lid 304 by tamper evident security tags 326 that must be broken in order to remove the closure 324 and access the opening.

The container 300 is collapsible, in that it can be collapsed into a collapsed state, and easily reassembled into an upright state. In the collapsed state, the container 300 fills a volume of around 30-50% of the volume it fills in the upright state. Therefore, when empty, the container 300 can be stored and transported more efficiently.

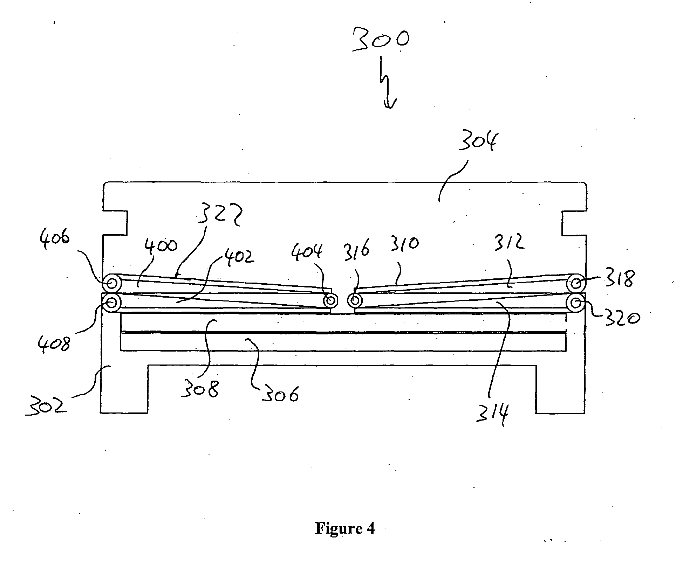

Figure 4 shows a view along the direction of the arrow 324 shown in figure 3 of the container 300 when in a collapsed state. The first 306 and second 308 side walls are folded flat against the base 302 of the container 300, i.e. they are generally parallel to the base 302. The third side wall 310 is folded such that the panels 312 and 314 are generally parallel to the base 302. The fourth side wall 322 is shown more clearly in figure 4. The fourth side wall 322 comprises two panels 400 and 402, joined together by a hinge 404. The upper panel 400 is attached to the lid 304 by a hinge 406, and the lower panel 402 is attached to the base 300 by a hinge 408.

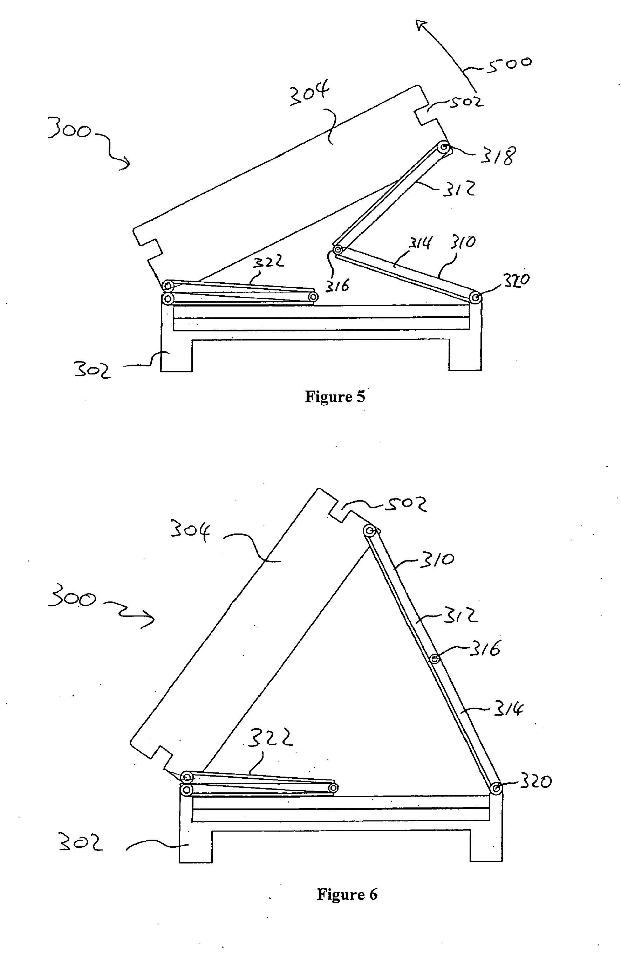

A method of reassembling the container 300 into the upright state will now be described with reference to figures 5 to 11. Referring to figure 5, the first step in reassembling the container 300 is to lift an edge of the lid 304 adjacent the hinge 318 in a direction shown by arrow 500. This unfolds the third side wall 310 as shown. The edge of the lid 304 includes recesses 502 that serve as lifting handles when lifting the edge of the lid 304 adjacent to the hinge 318. The edge of the lid 304 is lifted until the third side wall 310 is fully extended as shown in figure 6. When the third side wall 310 is fully extended, the hinge 316 between the upper 312 and lower 314 panels of the third side wall 310 releasably locks to prevent the third side wall 310 from folding again.

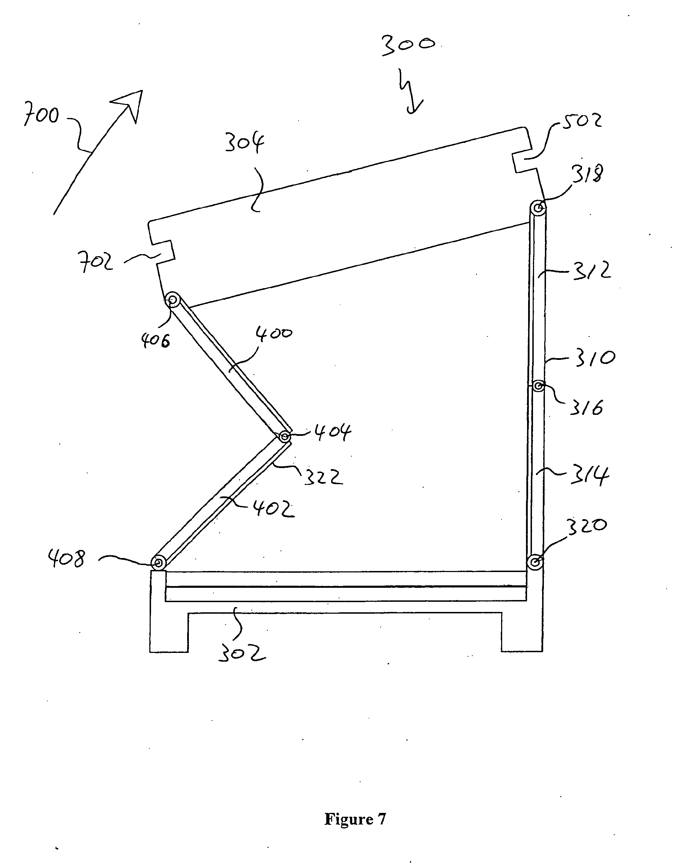

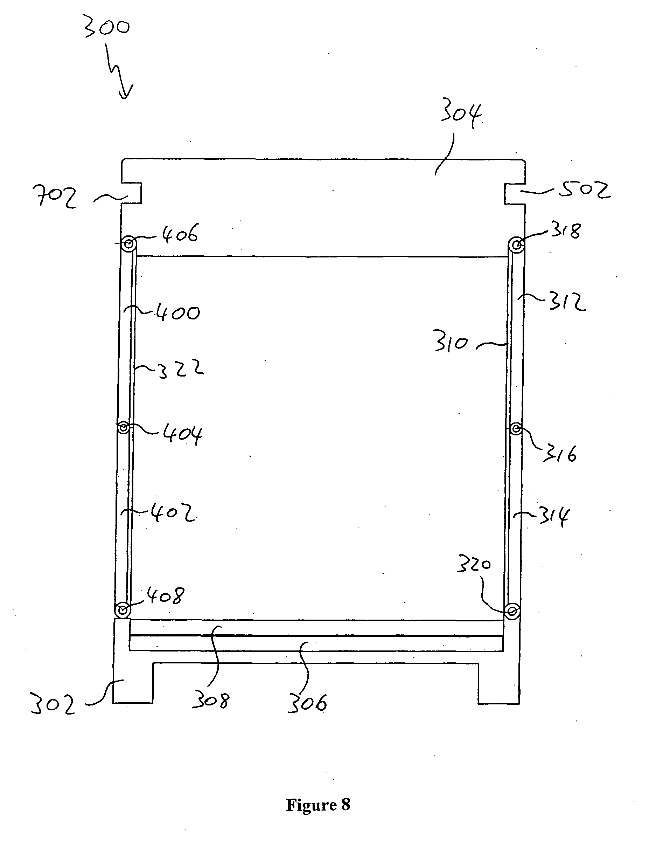

Referring to figure 7, the next step in reassembling the container 300 requires lifting an edge of the lid 304 adjacent the hinge 406 in a direction shown by arrow 700. This unfolds the fourth side wall 322 as shown. The edge of the lid 304 includes recesses 702 that serve as lifting handles when lifting the edge of the lid 304 adjacent to the hinge 406. The edge of the lid 304 is lifted until the fourth side wall 310 is fully extended as shown in figure 8. When the fourth side wall 322 is fully extended, the hinge 404 between the upper 400 and lower 402 panels of the fourth side wall 322 releasably locks to prevent the third side wall 310 from folding again.

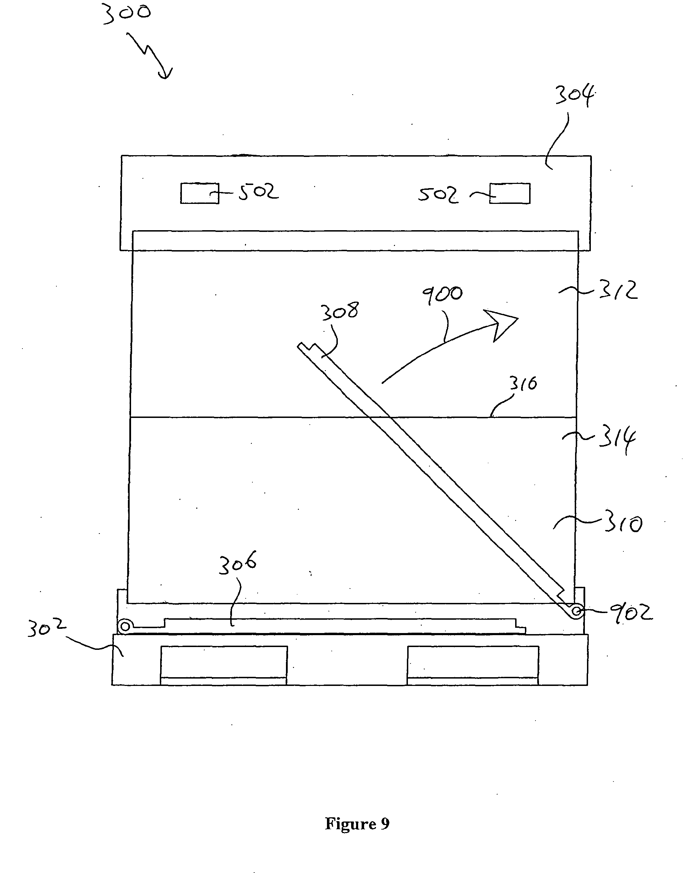

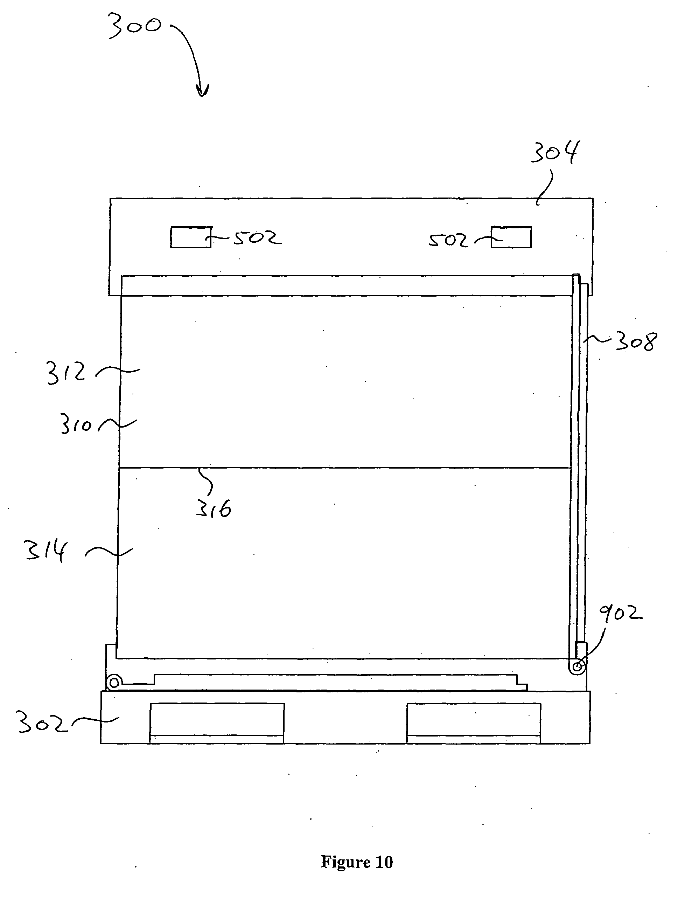

Referring to figure 9, which shows a view of the container 300 along the direction 326 shown in figure 3, the next stage in reassembling the container 300 is to lift the second side wall 308 in a direction shown by arrow 900. The second side wall 308 is attached to the base 300 by a hinge 902, and the second side wall 308 pivots about the hinge 902. When the second side wall 308 becomes vertical, i.e. perpendicular to the base 302 and the lid 304, the second side wall 308 releasably locks into place to prevent the first side wall 308 from falling flat again. Figure 10 shows the container 300 with the second side wall 308 locked into place.

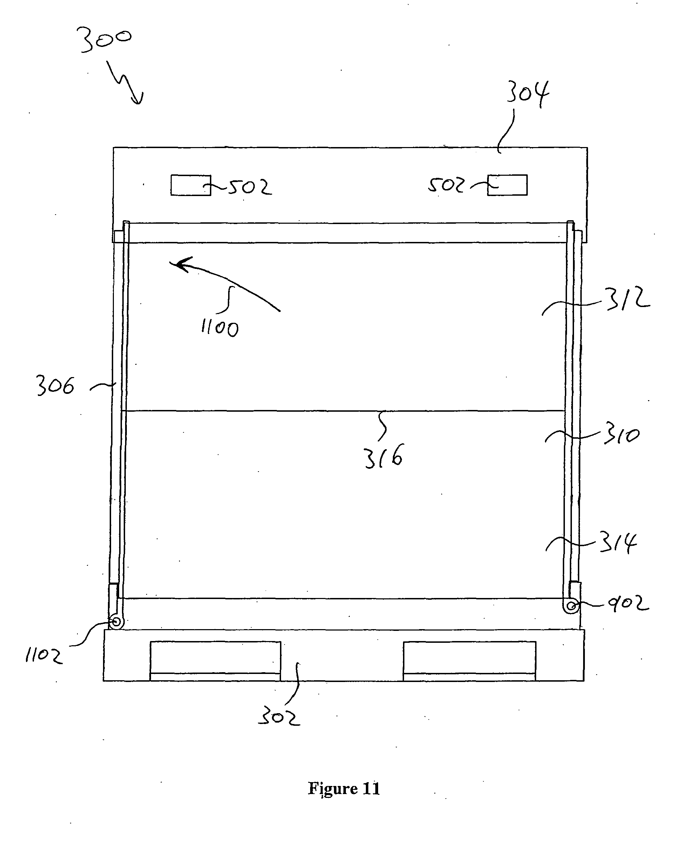

Referring to figure 11, the next stage in reassembling the container 300 is to lift the first side wall 306 in a direction shown by arrow 1100. The first side wall 306 is attached to the base 300 by a hinge 1102, and the first side wall 306 pivots about the hinge 1102. When the first side wall 306 becomes vertical, i.e. perpendicular to the base 302 and the lid 304, the first side wall 306 releasably locks into place to prevent the first side wall 306 from falling flat again. The first side wall 306 is shown locked into the vertical position in figure 11. At this point, the container is fully assembled and is in the upright state as shown in figure 3.

The side walls lock into their upright positions using spring-operated, latch mechanisms. For example, as shown in figure 3, a latch mechanism 340 locks the side wall 306 in an upright position, and a latch mechanism 342 locks the side wall 310 in an unfolded, upright position. The latch mechanisms are releasable, so that the container can be returned to the collapsed state.

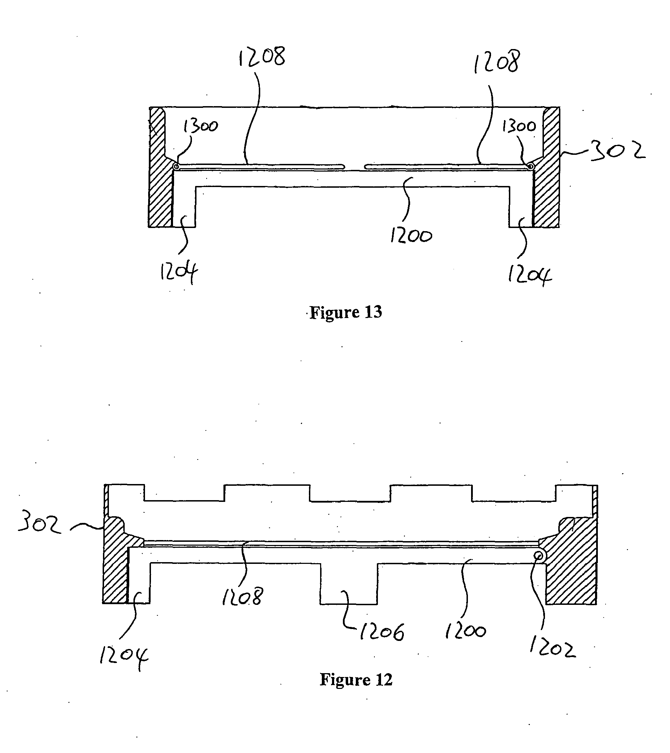

The base 302 of the container 300 includes a trapdoor 1200 as shown in figure 12, which shows a view of the base 302 of the container 300 along the direction 326 shown in figure 3. The trapdoor 1200 is attached along one edge to the base 302 by a hinge 1202. The hinge is located substantially along the same edge of the base 302 as the hinge 902 that attaches the second side wall 308 to the base 302 as shown in figure 9.

The trapdoor includes edge support feet 1204, also shown in figure 13, for supporting the trapdoor when closed as shown in figures 12 and 13. The trapdoor also includes central support feet 1206 that are located approximately half-way along two opposite edges of the trapdoor 1200. The trapdoor 1200, therefore, comprises an openable closure that may be opened to dispense goods through the base 302. The trapdoor remains closed during transportation and storage, for example, when resting on the ground or another container. Forks of a forklift truck hold the trapdoor 1200 closed when the container is being manipulated by the forklift truck.

The base 302 also includes substantially triangular flaps 1208 that are also shown in figure 13, which shows a view of the base along the direction 324 shown in figure 3. The flaps 1208 are attached to the base 302 by respective hinges 1300 that are located substantially along the same edge of the base 302 as the respective third 310 or fourth 322 side wall of the container 300. When the trapdoor 1200 is closed, the flaps 1208 lie flat on the trapdoor 1200.

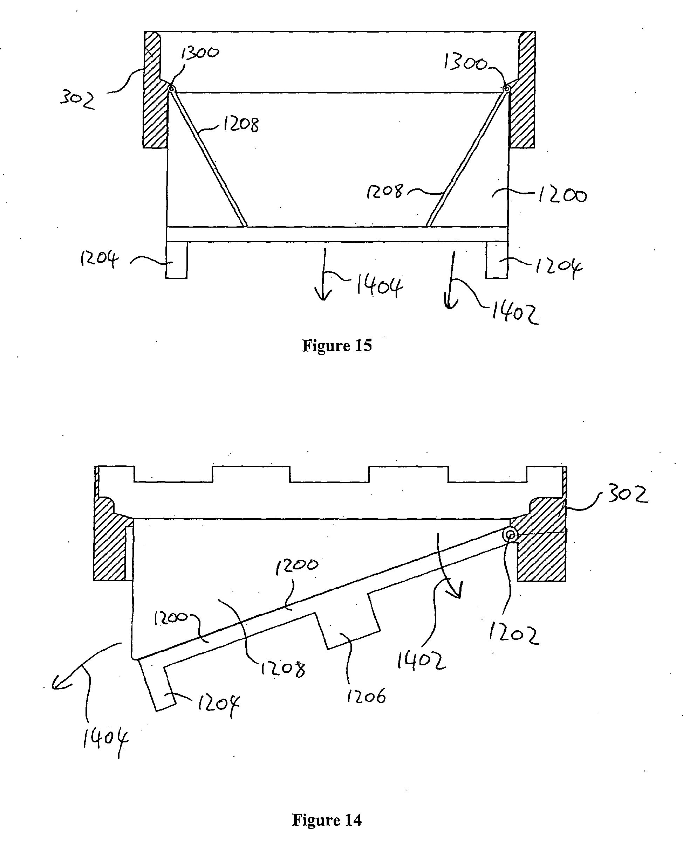

When the trapdoor 1200 is closed, the contents of the container 300 (such as, for example, preforms or caps) are prevented from leaving the container through the base 302. When the trapdoor is opened, the trapdoor pivots about the hinge 1202 as shown in figures 14 and 15 in a direction shown by arrow 1402. The flaps 1208 pivot about the respective hinges 1300 so that the trapdoor 1200 and flaps 1208 form a spout. The spout directs the contents of the container 300 when they are being dispensed, so that the contents being dispensed are directed in a direction generally indicated by the arrow 1404 in figure 14. The substantially triangular shape of the flaps 1208 can be seen clearly in figure 14.

The contents of the container 300 are directed in a direction 1404 that is generally away from the footprint of the container 300. That is, the container 300 has a footprint, which comprises the parts of the container that contact the ground when the container is on the ground, and also any area below the container between those parts. The edge of the trapdoor 1200 opposite the hinge 1202 is located close enough to the edge of the footprint, or beyond the footprint, such that the contents that flow out of the base 302 due to gravity do not land within the footprint of the container 300. Therefore, any debris on the underside of the container 300 (such as, for example, on the underside of the base 302 or the trapdoor 1200) that falls off whilst the contents are being dispensed does not become mixed with the contents. Substantially the entire contents of the container 300 are dispensed through the base 302 in this way, i.e. an uncontrolled quantity of the contents is quickly dispensed.

Once the contents have been dispensed, the trapdoor 1200 is pushed back into the position shown in figures 12 and 13. The trapdoor 1200 pushes the flaps 1208 back into the positions shown in figures 12 and 13.

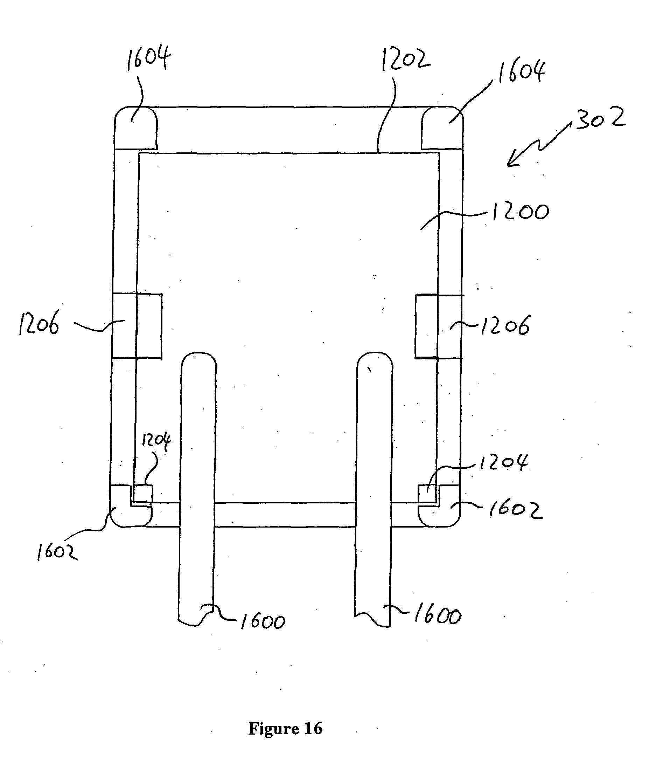

Figure 16 shows the underside of the base 302. The central support feet 1206 are shown along the edges of the trapdoor 1200 perpendicular to the hinge 1202. However, there are no support feet along the edge where the forks 1600 of a forklift truck (not shown) move underneath the container 300 to pick up the container 300. Therefore, the forks 1600 are less likely to damage support feet on the trapdoor 1200 or the base 302. The edge support feet 1204 are protected behind support feet 1602 on the base 302, which are generally stronger than the edge support feet 1204 due to their larger size. The base 302 also includes support feet 1604 located opposite the support feet 1602.

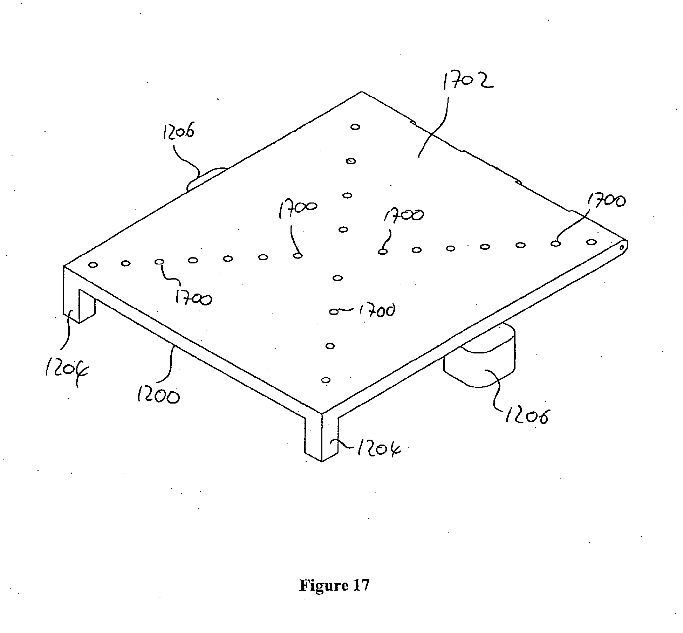

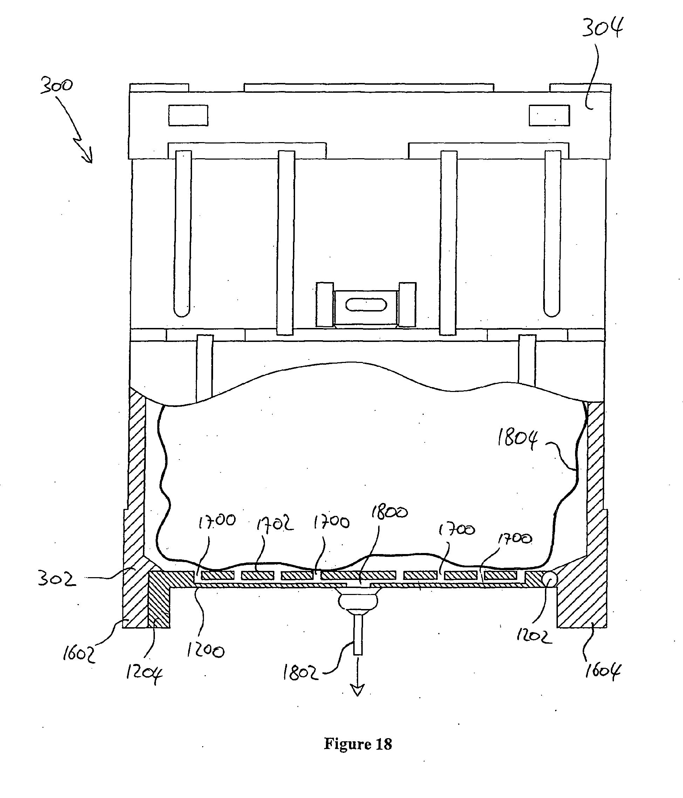

Figure 17 shows the trapdoor 1200. The trapdoor 1200 includes openings 1700 on an upper surface 1702 that forms part of the inner surface of the container 300. The openings are connected with each other and are also connected with an opening on the underside of the trapdoor 1200. Figure 18 shows the container of figure 3 in partial cross-section along the arrow 330 shown in figure 3. The opening 1800 on the underside of the trapdoor 1200 is shown connected to the openings 1700 on the upper surface 1702. A vacuum pump 1802 may be connected to the opening 1800 so that if the container 300 contains a liner 1804, such as, for example, a plastic bag, the liner 1804 will be retained against the trapdoor 1200.

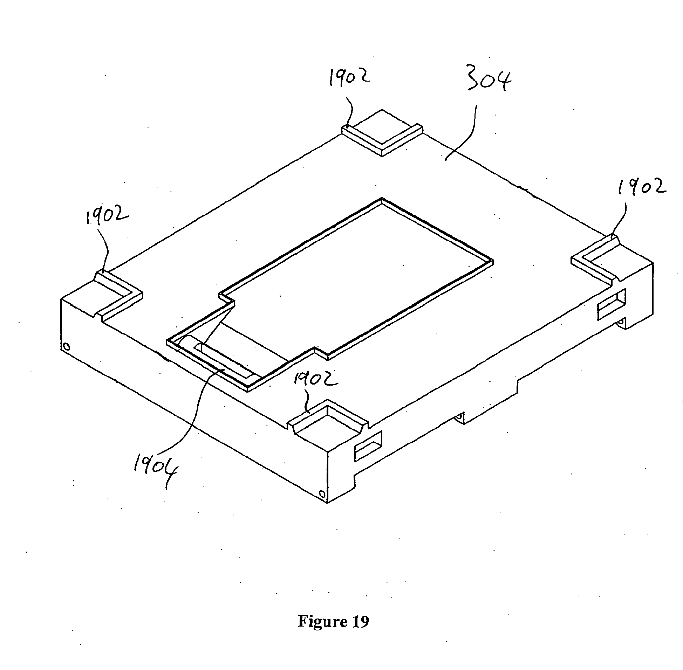

Figure 19 shows the lid 302 of the container 300 with the closure 324 removed. The contents of the container 300 may be accessed and/or dispensed through the opening 1900 in the lid 304. The lid 302 also includes raised portions 1902 that cooperate with the feet 1602 and 1604 of the base 302, such that when one container is stacked on top of another, the upper container is prevented from falling or slipping off the container underneath, or the possibility is reduced.

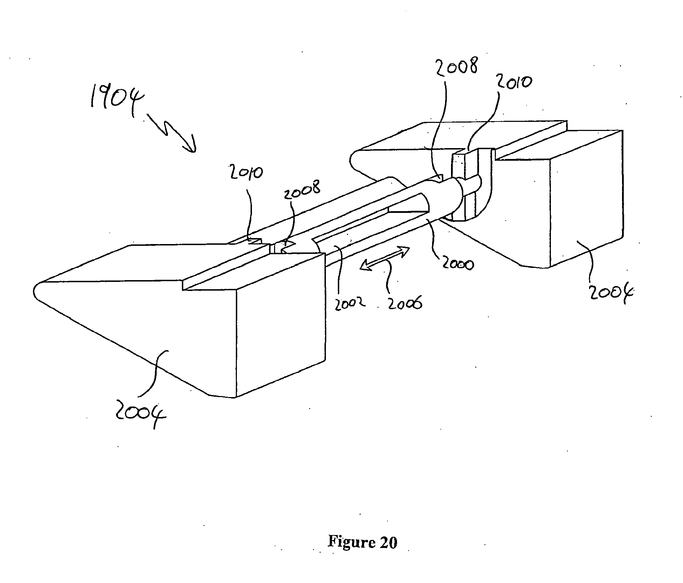

The lid 304 also includes means 1904 for sealing the liner inside the container 302. Figure 20 shows the locking means 1904 in more detail. The locking means 1904 includes a rotatable cylinder 2000 with a through slit 2002. The rotatable cylinder 2000 is rotatably mounted between two end portions 2004. The cylinder 2000 is also slidable along its axis of rotation as indicated by the arrow 2006. The cylinder 2000 includes recesses 2008 at each end that may cooperate with respective ridges 2010 on the end portions 2004. The cylinder may be slid towards one of the end portions 2004, and aligned such that the ridge 2010 on the end portion 2004 is engaged within the appropriate recess 2008 on the cylinder 2000. Rotation of the cylinder 2000 is therefore releasably prevented by this arrangement. Rotation can be resumed by sliding the cylinder 2000 away from the end portion 2004, such that the recess 2008 and ridge 2010 are no longer in engagement.

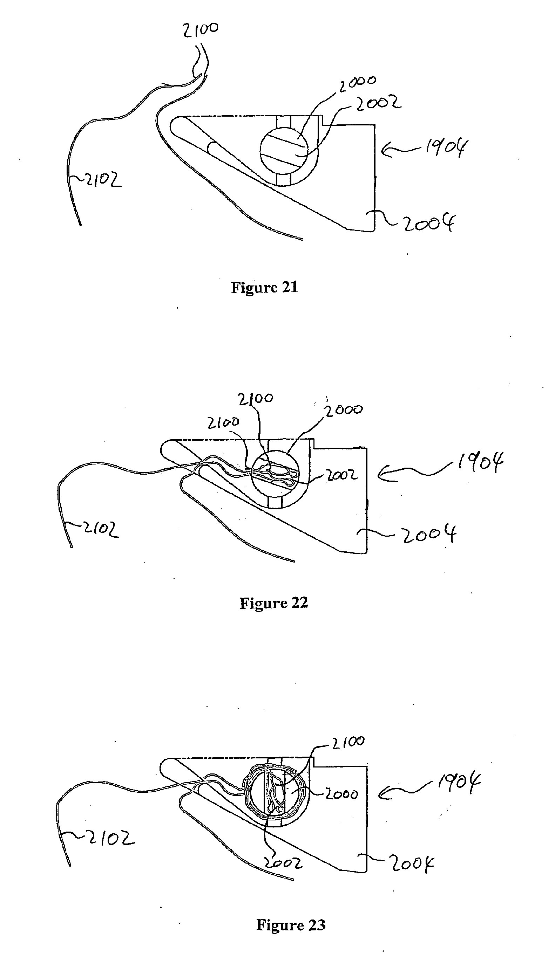

A method of sealing the liner within the container 300 using the sealing means 1904 will now be described, with reference to figures 21 to 23. Referring to figure 21, which shows a cross section of a side view of the sealing means 1904, the through slit 2002 of the cylinder 2004 is aligned towards the open ends 2100 of the liner 2102. Only the upper portion of the liner 2102 is shown for clarity. Next, as shown in figure 22, the open ends 2100 are inserted into the slit 2002 in the cylinder 2000. Then, as shown in figure 23, the cylinder 2000 is rotated so that a portion of the liner 2102 is wrapped around the cylinder. The open ends 2100 of the liner 2102 are therefore held within the slit 2002 in the cylinder 2000, and the liner is sealed. The cylinder is then releasably locked as described above to prevent the liner 2102 from unwinding from the cylinder 2000.

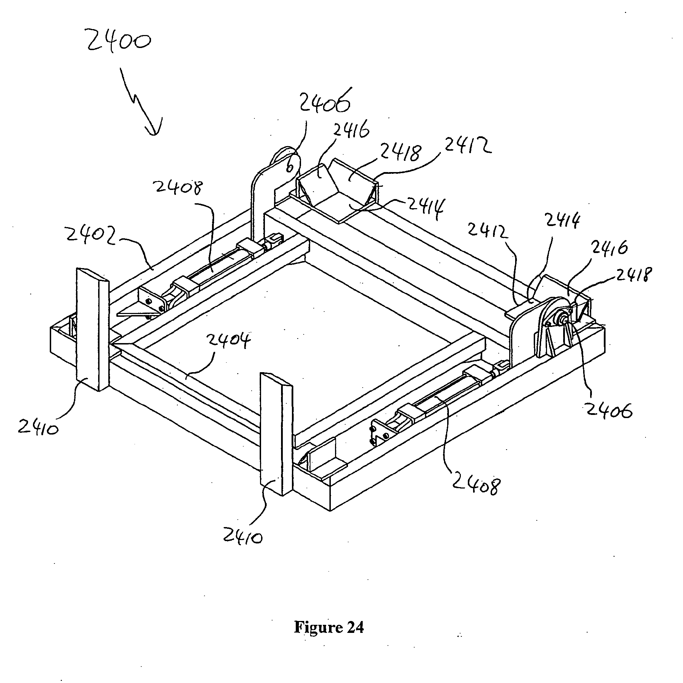

Figure 24 shows a dispensing device 2400 that can be used to dispense contents of the container 300 through the trapdoor 1200 in the base 302 of the container. The dispensing device 2400 includes a fixed outer frame 2402 and an inner frame 2404 that is attached to the outer frame 2402 by pivot points 2406, and may be pivoted relative to the outer frame 2402 about the pivot points 2406. A pair of pistons 2408 are operable to pivot the inner frame 2404 relative to the outer frame 2402 and to return the inner frame 2404 to the position shown in figure 24, where the inner frame is located substantially within the outer frame 2402.

The outer frame 2402 includes a pair of abutments 2410 which abut against the container 300 adjacent to one side wall of the container 300 when the container is mounted on the dispensing device 2400. A pair of foot guides 2412 are located on the outer frame 2402, adjacent a side wall of the container 300 substantially opposite the side wall adjacent to the abutments 2410 when the container is mounted on the dispensing device 2400. The foot guides 2412 are located such that when the container 300 is mounted on the dispensing device 2400, support feet 1604 of the container rest on a base 2414 of the foot guides 2412. Each foot guide 2412 includes sloping side walls 2416 and 2418 that may guide the support feet 1604 as the container is being lowered onto the dispensing device 2400, and may help to correctly locate the container on the support device 2400.

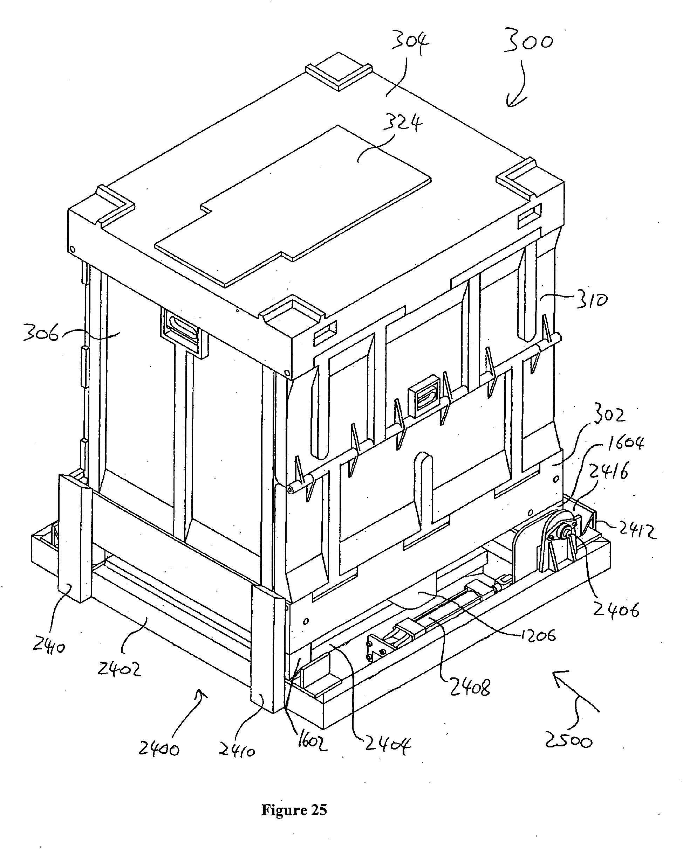

Figure 25 shows the dispensing device 2400 with the container 300 mounted on the dispensing device 2400. The container can be mounted on the dispensing device 2400 by, for example, lifting the container 300 substantially over the dispensing device 2400 using a forklift truck, and then lowering the container 300 onto the dispensing device 300. The container 300 can be removed from the dispensing device 2400 by, for example, lifting the container 300 using a forklift truck.

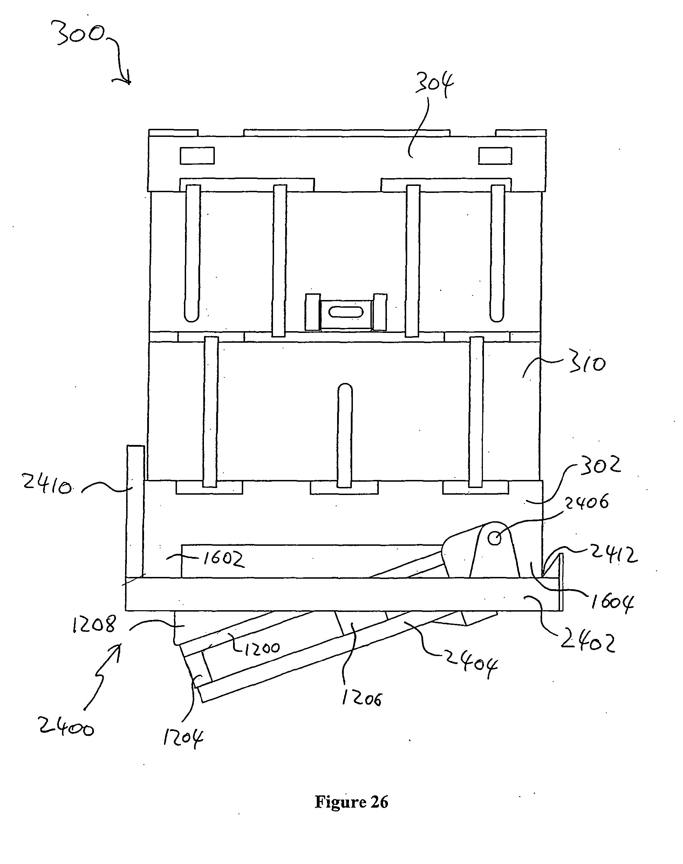

Figure 26 shows a side view of the container 300 and dispensing device 2400 along a line 2500 shown in figure 25. The inner frame 2404 has been pivoted relative to the outer frame 2402 using the pistons 2408. The trapdoor 1200 of the container 300, which rests on the inner frame 2404 via the support feet 1204 and 1206, pivots relative to the base of the container 302 as the inner frame 2404 pivots. The flaps 1208 lower and form a spout through which the contents of the container 300 can be dispensed. The spout directs the contents being dispensed substantially away from an area below the container 300 and/or the dispensing device 2400. Therefore, any debris on the underside of the container 300 will not become mixed with the contents being dispensed.

The contents are dispensed in an uncontrolled manner, i.e. all of the contents are dispensed. Once the container 300 is empty, the trapdoor 1200 may be closed by operating the pistons 2408 to raise the inner frame 2404 to the position shown in figures 24 and 25, which raises and closes the trapdoor 1200.

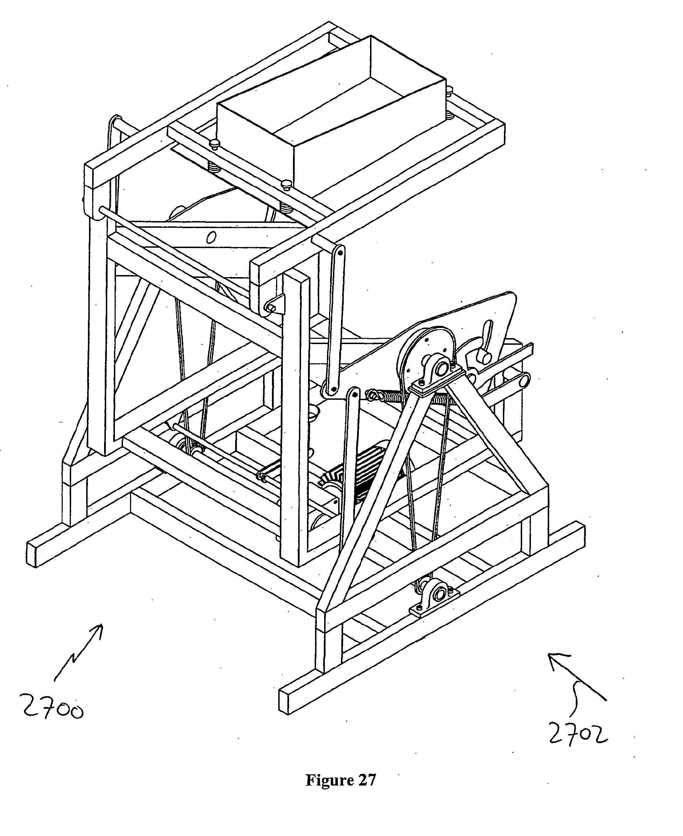

Figure 27 shows a perspective view of a further dispensing device 2700. The further dispensing device 2700 may be used to rotate a container 300 to dispense the contents of the container 300 in a controlled manner through the lid 304. That is, a fraction or approximate fraction of the contents can be dispensed, with the remainder of the contents remaining in the container 300.

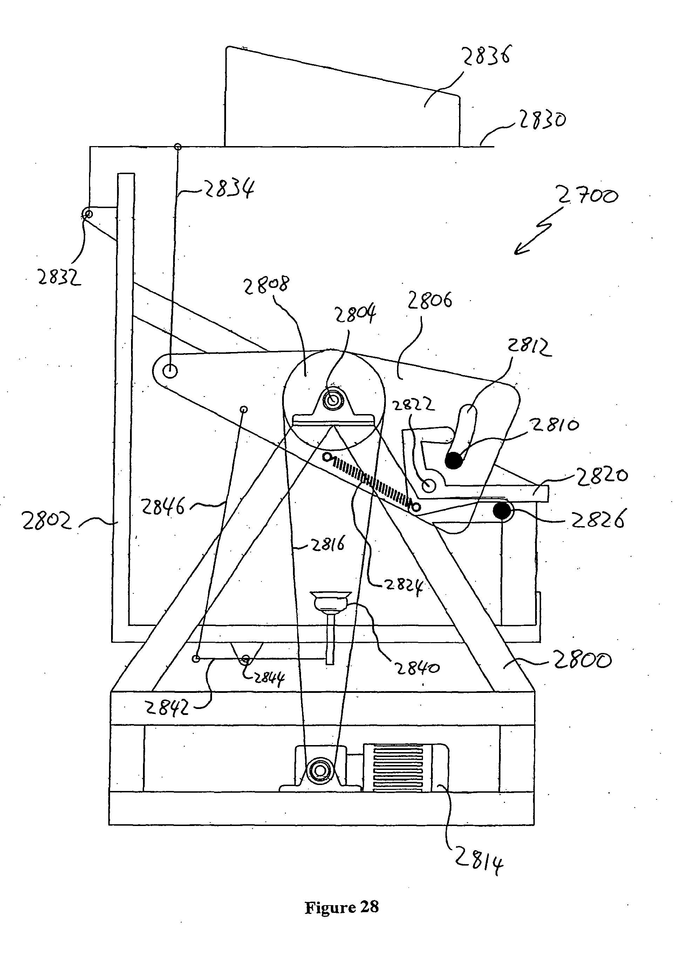

Figure 28 shows a side view of the dispensing device 2700 along a direction shown by arrow 2702 in figure 27. Some components are shown schematically for clarity. The dispensing device 2700 includes a fixed frame 2800 and a rotatable frame 2802 that is rotatable about an axle 2804 on the fixed frame 2800. A clamp cam 2806 is also mounted rotatably on the axle 2804. A pulley 2808 is mounted on the axle 2804 and is attached to the clamp cam 2806. A pin 2810 on the rotatable frame 2802 is located within a slot 2812 in the clamp cam 2806 at a first end of the slot 2812, and restricts the angle of rotation that the clamp cam 2806 can undergo relative to the rotatable frame 2802. When the pin 2810 is located at the first end of the slot 2812, the clamp cam 2806 cannot undergo anticlockwise rotation relative to the rotatable frame 2802, and when the pin 2810 is located at the opposite end of the slot 2812, the clamp cam 2806 cannot undergo clockwise rotation relative to the rotatable frame 2802.

An electric motor 2814 is mounted on the fixed frame 2800 and may rotate the pulley 2804 in either direction via a band or chain 2816.

A locking arm 2820 is rotatably mounted on a pivot 2822 on the clamp cam 2806. In the position shown in figure 28, the locking arm 2820 is urged in a clockwise direction by a spring 2824 which is attached between the clamp cam 2806 and the locking arm 2820. A part of the locking arm 2820 rests against a pin 2826 on the fixed frame 2800. The locking arm is, therefore, prevented from rotating in a clockwise direction.

An upper clamp portion 2830 is rotatably mounted on an axle 2832 on the rotatable frame 2802. A linking arm 2834 is rotatably attached at each end to the upper clamp portion 2830 and the clamp cam 2806 respectively, such that when the clamp cam rotates in a clockwise direction relative to the rotatable frame 2802, the upper clamp portion 2830 pivots in an anticlockwise direction about the axle 2832 relative to the rotatable frame 2802. The upper clamp portion 2830 includes a chute 2836 to direct the contents of the container 300 being dispensed through the lid 304.

A vacuum pump 2840 is mounted on a pivotable arm 2842 that is attached to a pivot point 2844 on the rotatable frame 2802. A linking arm 2846 is rotatably attached at each end to the clamp cam 2806 and an end of the pivotable arm 2842 opposite the vacuum pump 2840 respectively, such that when the clamp cam rotates in a clockwise direction relative to the rotatable frame 2802, the pivotable arm 2842 pivots in a clockwise direction about the pivot point 2844 relative to the rotatable frame 2802.

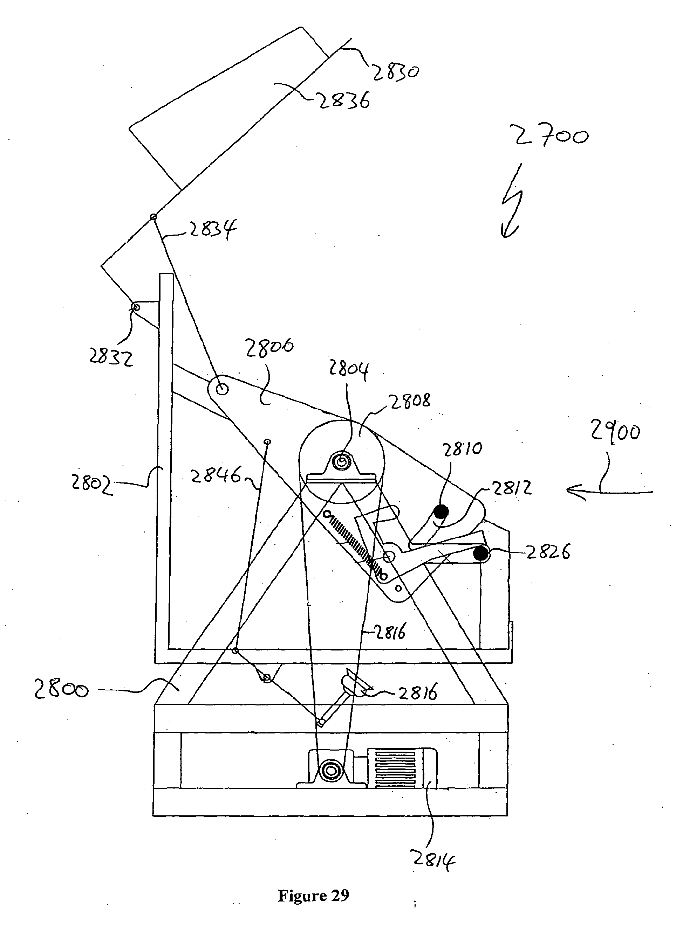

To insert a container 300 into the dispensing device 2700, the motor 2814 is operated such that the pulley 2808 and clamp cam 2806 rotate in a clockwise direction about the axle 2804, relative to the fixed frame 2800 and the rotatable frame 2802. The pin 2810 on the rotatable frame 2802 becomes located at an opposite end of the slot 2812 in the clamp cam 2806 as shown in figure 29. Thus, further clockwise rotation of the clamp cam 2806 relative to the rotatable frame 2802 is prevented, i.e. the clamp cam 2806 has been fully rotated in the clockwise direction. The clamp cam 2806 is shown in figure 29 fully rotated in the clockwise direction. In this position, the upper clamp portion 2830 has been raised by rotation in the anticlockwise direction, and the vacuum pump 2840 has been lowered by rotation of the pivotable arm 2842 in the clockwise direction.

With the dispensing device 2700 in the position and/or configuration shown in figure 29, a container 300 may be placed within the dispensing device 2700 by moving it (using, for example, a forklift truck) in the direction shown by arrow 2900, and lowering it onto the rotatable frame 2802. The electric motor 2814 can then be operated to rotate the pulley 2808 and the clamp cam 2806 in an anticlockwise direction, such that the dispensing device 2700 returns to the position and/or configuration shown in figure 28. In this position, the container 300 (not shown in figure 28) is clamped between the upper clamp portion 2830 and a lower part of the rotatable frame 2802. The vacuum pump 2816 has been raised to connect to the opening 1800 in the trapdoor 1200 of the container 300 as shown in figure 18, which shows a vacuum pump 1802 connected to the opening 1800.

With further anticlockwise rotation of the pulley 2808 and clamp cam 2806 using the motor 2814, the pin 2810 on the rotatable is located at the first end of the slot 2812.

The clamp cam 2806, therefore, cannot undergo anticlockwise rotation relative to the rotatable frame 2802. Instead, both the clamp cam 2806 and the rotatable frame 2802 rotate in an anticlockwise direction. The rotation of the rotatable frame 2802 and a container 300 mounted therein can be used to dispense goods from the container 300 through the lid 304 of the container 300 in a controlled manner. The chute 2836 in the upper clamp portion 2830 directs the goods being dispensed from the container.

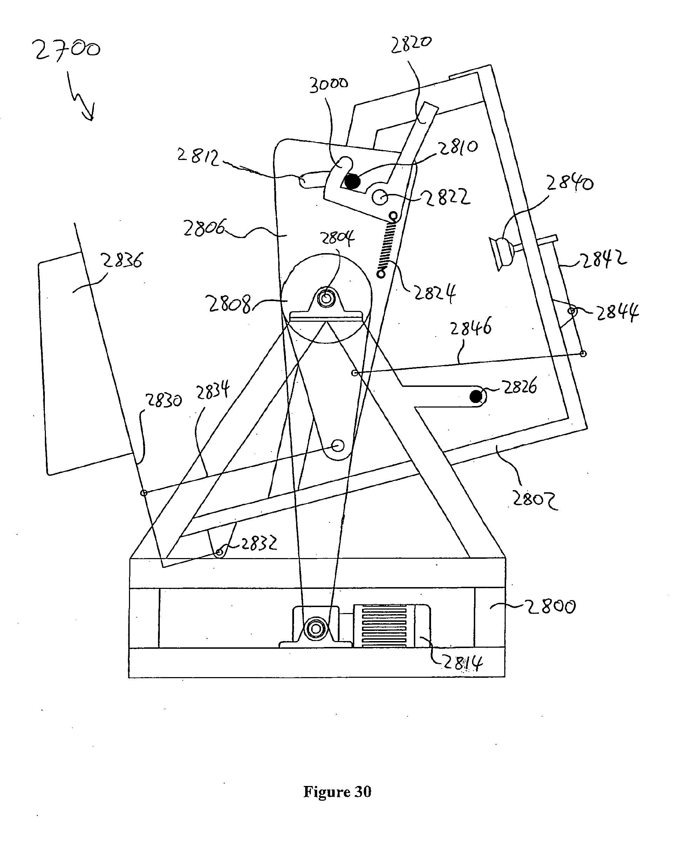

Figure 30 shows the dispensing device 2700 with the rotatable frame 2802 rotated in an anticlockwise direction to dispense goods through the lid 304 of the container 300 (not shown in figure 30). The locking arm 2820 is no longer restricted from rotating by the pin 2826 on the fixed frame 2800. Instead, the locking arm has been rotated in a clockwise direction relative to the clamp cam 2806 by the spring 2824. As a result, a portion 3000 of the locking arm 2820 has moved into a position so as to prevent the pin 2810 on the rotatable frame 2802 from substantially moving away from the first end of the slot 2812 in the clamp cam 2806, thereby preventing rotation of the clamp cam 2806 relative to the rotatable frame 2802 when the dispensing device is in the position and/or configuration shown in figure 30. The locking arm 2820 thereby provides an automatically engaging safety device that prevents the upper clamp portion 2830 from rotating relative to the fixed frame 2802 and releasing the container 300.

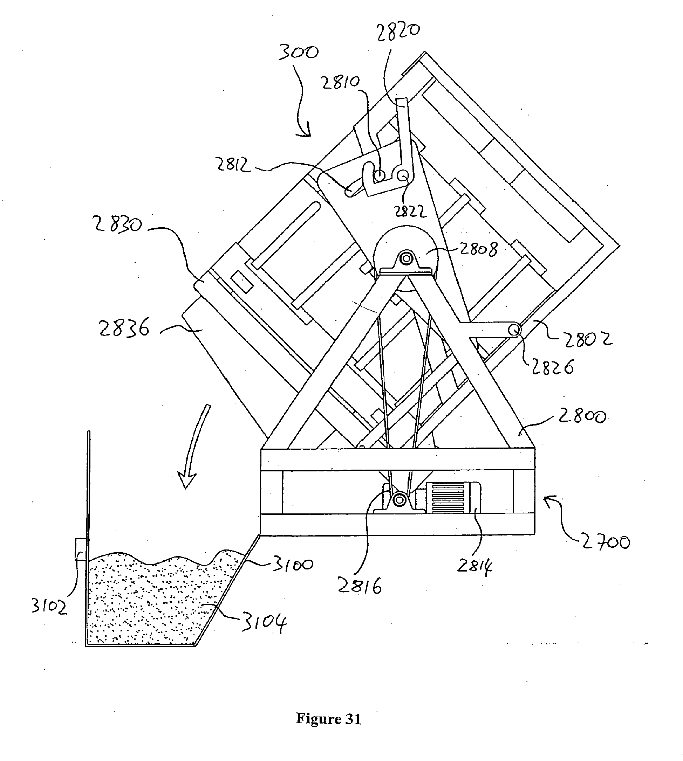

Figure 31 shows the dispensing device 2700 with a container 300 mounted therein. The dispensing device 2700 is in a position and/or configuration for dispensing the contents of the container 300 through the lid 304 of the container 304. The chute 2836 directs the contents being dispensed into a hopper 3100 located alongside the container 300. If the container 300 includes a liner, such as, for example, a plastic bag, the liner is retained within the container 300 by the action of the vacuum pump 2816.

The hopper 3100 includes a sensor 3102 that detects whether the contents 3104 of the hopper 3100, which have been dispensed from the container 300, have reached a certain level in the hopper 3100. The sensor 3102 may comprise, for example, an optical sensor, proximity switch, and/or some other suitable sensor. The sensor may be used, for example, to control the electric motor 2814 to maintain a sufficient level of the contents 3104 of the container. This may be achieved, for example, by rotating the rotatable frame 2802 and the container 300 further in an anticlockwise direction relative to the fixed frame 2800 to dispense more contents of the container 300 into the hopper 3100. The rotation may be halted when the sensor 3102 detects that the contents 3104 of the hopper 3100 have reached a sufficient level.

Once all of the contents of the container 300 have been dispensed, or no further contents are required and the container 300 is to be removed from the dispensing device 2700, the rotatable frame 2802 and container 300 are rotated in a clockwise direction relative to the fixed frame 2800, using the motor 2814, to return the dispensing device 2700 to the position and/or configuration shown in figure 28, which does not show the container 300. The dispensing device 2700 may then be placed in the position and/or configuration shown in figure 29, and the container removed using, for example, a forklift truck. Another container 300 may then be inserted into the dispensing device 2700, if required.

If a container 300 that is removed from the dispensing device 2700 contains contents and a liner, the liner may be sealed using the sealing means 1904 in the lid 304, as described above.

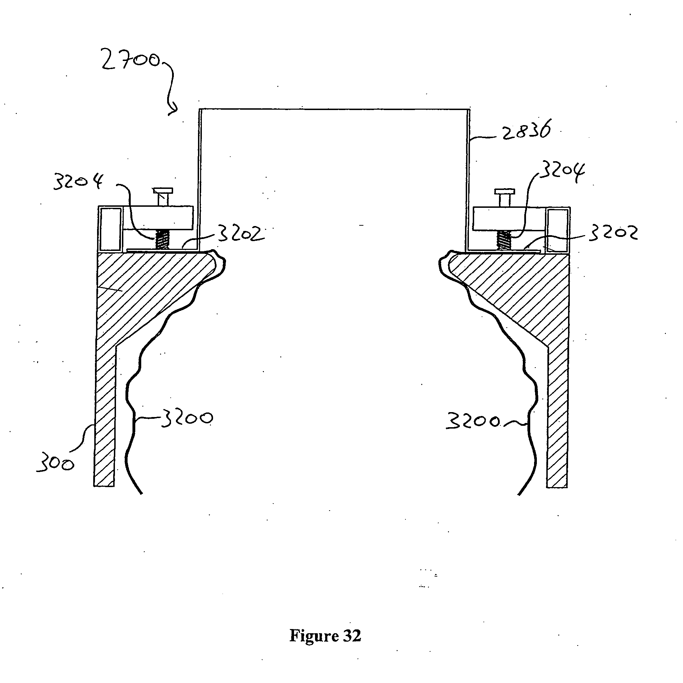

Figure 32 shows a cross section of a portion of the dispensing device 2700 and a container 300 mounted therein. The container 300 includes a liner 3200 such as, for example, a plastic bag. The chute 2836 includes laterally extending portions 3202. The laterally extending portions are urged against free ends of the liner 3200 by springs 3204 mounted on the upper clamp portion 2830. Thus, an effective seal can be formed between the chute 2836 and the liner 3200 when the container 300 is clamped within the dispensing device 2700.

The dispensing device 2700 may be used, for example, to dispense bottle closures such as bottle caps from the container 300. However, it may be used to dispense any other contents of the container 300, with or without a liner in the container 300.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A container having openings on an inside surface, wherein the openings are for use with vacuum means for retaining a liner within the container whilst contents of the liner are being dispensed.

2. A container as claimed in claim 1 comprising a base, wherein the base includes a first openable closure, and wherein the first closure is arranged when opened to direct contents to be dispensed from the container.

3. A container including a base, wherein the base includes a first openable closure, and wherein the first closure is arranged when opened to direct contents being dispensed from the container.

4. A container as claimed in claim 3, comprising openings on an inside surface of the container, wherein the openings are for use with vacuum means for retaining a liner within the container whilst contents of the liner are being dispensed.

5. A container as claimed in any of claims 2 to 4, wherein the first closure comprises a trapdoor.

6. A container as claimed in claim 5, wherein the first closure includes flaps, and the trapdoor and the flaps form a spout for directing the contents when the first closure is opened.

7. A container as claimed in claim 5 or 6, wherein the trapdoor is openable such that an edge of the trapdoor is positioned close enough to or beyond an edge of a footprint of the container so as to direct contents outside the footprint.

8. A container as claimed in any of claims 2 to 6, comprising a lid having a second openable closure.

9. A container as claimed in claim 8, wherein the container includes a liner, and the lid includes means for sealing the liner.

10. A container as claimed in claim 9, wherein the means for sealing the liner comprises a cylinder having a groove or through hole for receiving open ends of the liner.

11. A container as claimed in claim 10, wherein the cylinder is rotatable.

12. A container as claimed in claim 11, wherein the means for sealing the liner comprises locking means for locking rotation of the cylinder.

13. A container as claimed in any of the preceding claims, wherein the container comprises first and second pivotable walls which may be pivoted so as to lie flat against the base, and third and fourth foldable walls which may be folded so as to lie flat against the base, such that the container may be reduced to a reduced size, collapsed state and returned to an upright state.

14. A container having a first openable closure for dispensing of an uncontrolled quantity of contents, and a second openable closure for dispensing of a controlled quantity of the contents.

15. A method of dispensing goods from a container, comprising opening a closure in a base of the container by a sufficient amount such that an edge of the closure is close enough to an edge of a footprint area of the container that goods are dispensed outside the footprint area of the container.

16. A method of dispensing goods, comprising:
applying vacuum means to a container to retain a liner inside the container;
dispensing contents from the liner.

17. A method of dispensing goods as claimed in claim 16, wherein dispensing contents from the liner comprises opening a closure in a base of the container by a sufficient amount such that an edge of the closure is close enough to an edge of a footprint area of the container that goods are dispensed outside the footprint area of the container.

18. A dispensing device for dispensing goods from a container, the dispensing device comprising means for rotating the container to dispense the goods from an opening in a lid of the container.

19. A dispensing device as claimed in claim 18, comprising vacuum means for retaining a liner within the container via openings in an inner surface of the container.

20. A dispensing device as claimed in claim 18 or 19, comprising a dispensing chute for directing goods being dispensed from the container.

21. A dispensing device as claimed in any of claims 18 to 20, wherein the goods are dispensed into a hopper, and the dispensing device comprises a level detector for detecting whether the goods being dispensed have reached a level in the hopper, and also comprises means for stopping or reversing rotation of the container when the goods have reached the level in the hopper.

22. A container system for transportation and dispensing of flowable bottom articles comprising:
a container having a top wall, a bottom wall defining a footprint area of the container when on the ground, and side walls; and
a bottom dispensing frame adapted to receive the container in a position off the ground;
wherein the container has an openable bottom closure and the frame has a closure member to cooperate with the container when disposed in the frame to open the closure and wherein bottom articles in the container that flow through the opening under gravity are directed by the closure to fall outside the footprint area of the container.

23. A system as claimed in claim 22, in which the closure comprises a trapdoor closing a bottom opening of said bottom wall and hinged at a first end of said opening to the bottom wall, and side chute elements connected inside the container to the bottom wall along sides of said bottom opening extending from said end and contacting and supported by the trapdoor, and in which the closure member of the frame supports said trapdoor and permits restricted pivoting thereof to an open position, in which the side chute elements define with the trapdoor a chute from which bottom articles in the container flow, an edge of said trapdoor remote from said end being close enough to or beyond the edge of said footprint area that said bottom articles fall outside said footprint area.

24. A system as claimed in claim 23, in which said side chute elements are triangular flaps hinged to said bottom wall.

25. A container system for transportation and dispensing of flowable top articles comprising:
a container having a top wall, a bottom wall defining a footprint area of the container when on the ground, and side walls; and
a top dispensing frame adapted to receive the container in a position off the ground;
wherein the container has an openable top closure in a top opening of the container and a liner for the container having an opening extending through said top opening, holes being formed in the container, and said frame comprises means to tip said container when supported in the frame and a vacuum source to be applied against said holes to retain said liner in the container as top articles in the liner pour through said opening of the liner and said top opening of the container on tipping of said container.

26. A container system as claimed in claim 25, in which said top frame comprises a pivot system which, in an open position pivots vacuum means away from said bottom wall of the container when disposed in the top frame and a top chute member away from said top opening, and, in a closed position, clamps the vacuum source against said holes and said top chute against said top opening, whereby, when the container is tilted in said frame, top articles flowing out of the top opening are directed by said top chute.

27. A container system as claimed in claim 25 or 26, in which said holes are in the bottom wall and comprise a plurality of holes on an inside surface of said bottom wall communicating with a vacuum port on an outside surface of said bottom wall.

28. A container system as claimed in any of claims 22 to 24 when also a container system as claimed in any of claims 25 to 27.

29. A container system as claimed in claim 28, in which said holes are in said bottom closure.

30. Use of a container system as claimed in claim 28 or 29, or any of claims 22 to 24, including bottle forms as said bottom articles.

31. Use of a container system as claimed in claim 28 or 29, or any of claims 25 to 27, including bottle caps as said top articles.

32. A container substantially as described herein with reference to, and as illustrated in, figures 3 to 32.

33. A dispensing device substantially as described herein with reference to, and as illustrated in, figures 3 to 32.

34. A method of dispensing goods substantially as described herein with reference to, and as illustrated in, figures 3 to 32.
